Europäisches Patentamt

European Patent Office

Office européen des brevets

(19)

(11) Publication number: **0 067 472**
**B1**

(12) **EUROPEAN PATENT SPECIFICATION**

(45) Date of publication of patent specification: **10.04.85**

(21) Application number: **82200662.3**

(22) Date of filing: **28.05.82**

(51) Int. Cl.⁴: **B 29 C 35/16,** B 29 C 43/22,
B 29 C 47/00

(54) Method and device for cooling moulds.

(30) Priority: **11.06.81 NL 8102822**
**11.06.81 NL 8102823**

(43) Date of publication of application:
**22.12.82 Bulletin 82/51**

(45) Publication of the grant of the patent:
**10.04.85 Bulletin 85/15**

(84) Designated Contracting States:
**AT BE CH DE FR GB IT LI LU NL SE**

(56) References cited:
**DE-A-2 008 105**
**FR-A-1 315 417**
**NL-A-6 502 570**
**US-A-3 025 865**
**US-A-3 776 679**

(73) Proprietor: **WAVIN B.V.**
**Händellaan 251**
**NL-8031 EM Zwolle (NL)**

(72) Inventor: **Leloux, Arnoldus Willem Jan**
**14 Mendelsohnstraat**
**NL-7701 TS Dedemsvaart (NL)**

(74) Representative: **Keijser, Johannes Maurits L.F.
et al**
**EXTERPATENT Willem Witsenplein 4**
**NL-2596 BK 's-Gravenhage (NL)**

Courier Press, Leamington Spa, England.

## Description

The invention relates to a method of cooling moulds and to a moulding apparatus, comprising a plurality of moulds which are circulating in a horizontal plane, each mould having an internal cooling space connected with a supply aperture and a discharge aperture for a cooling medium.

Such a method and a moulding apparatus, respectively are known for example from US—A—3 776 679. This publication discloses one example of a great variety of moulding apparatus of the type concerned. In this case the moulds are supported by a table. This table contains supply and discharge ducts for the cooling medium flowing through the moulds. A specific disadvantage of this is that this principle makes it difficult to prevent leakage between the moulds and the table as well as between the moulds.

The abovementioned US Patent Letter was chosen as the state of the art because it discloses moulds which are circulating in a horizontal plane, and this is a feature which is common to many apparatus and which, as will be explained later, is essential to the solution proposed by the present invention.

Other moulding apparatus may be circulating in a vertical plane. An example of this is DI—A—2 008 105, which discloses another solution to the cooling problem which is illustrative of the prior art. To the supply apertures of the internal cooling system of the moulds filling tubes are connected which protrude from the moulds proper. Each of these tubes ends in a narrow, rather long funnel. The funnels belonging to the successive moulds are overlappingly arranged, such that, when the series of moulds moves below water feed apertures, there will be little spillage of the cooling water.

The general problem underlying the present invention is that it is desirable to provide improved cooling techniques, such that production speeds can be increased. In endeavours to increase the production speeds in various machines in a production line the cooling of the moulds constitutes a particular problem. It is very difficult to influence the cooling time because it is determined to a very great extent by the process. A certain time is required to let a piece of work cool down to such a temperature that the product has obtained a fixed shape.

This means, amongst other things, that when increasing the production speed of a moulding machine, the machine will have to become longer, in order to still obtain a sufficient cooling time. The consequence of this again is that the cooling system is becoming constructively complicated.

The present invention therefore aims at providing a solution for these problems in form of a system which can be simply realized irrespective of the nature, extent of complicatedness of the machine or the number of moulds in a machine, respectively.

The method according to the invention is characterized in that the liquid is passed by means of siphon action from a gutter or trough, situated on top, through the moulds and is discharged to a collecting gutter situated therebelow.

This principle can be realized constructively in a very simple manner. Thus apparatus according to the invention is characterized in that above the circulatory path of the moulds and substantially parallel to said path a supply gutter for cooling liquid is arranged, as well as below and also substantially parallel to said path a discharge gutter and in that the cooling medium supply aperture of each mould, at the top, is provided with a siphon tube of such a shape that the entrance end thereof passes over the edge of the supply gutter and down to a level lower than said edge, the cooling medium discharge aperture being provided, at the bottom of the mould, with a discharge tube, the outflow end of which finds itself in or above the discharge gutter.

Thus there is simply made use of gravity to let the liquid flow through the mould.

In order to start the siphon action or to keep it going, respectively, it is advantageous when the entrance of the siphon tube is bent in horizontal direction. So use is made here of the dynamic pressure during displacement.

Furthermore a device can be realized such that the supply gutter is provided with jet pipes for the supply of cooling liquid, which jet pipes are directed in the sense opposite to the direction of bending of the siphon tube.

The invention is particularly advantageous when applied for cooling mould halves circulating in two-loop-shaped paths having adjoining straight portions, such that the mould halves move along with a plastics tube coming from an extruder so as to shape said tube. Still more particularly it is envisaged to apply the invention to cool mould halves for manufacturing corrugated plastics tubes.

FR—A—1 315 417 discloses a moulding apparatus for the manufacture of corrugated plastic tubes, in which the moulds are cooled by means of water flowing past the internal mould surface.

NL—A—65 02570 discloses the use of siphon action for the supply of cooling water. What is cooled in this case, however, is a web of hot metal coming from a rolling machine.

Similarly, US—A—3 025 865 discloses cooling hot metal strip by a laminar flow of water employing siphon tubes for the supply of this water from a container.

The invention will now be clarified with reference to the accompanying drawing of an embodiment.

Figure 1 shows diagramatically the arrangement of a device according to the invention relative to the path of displacement of the moulds;

Figure 2 is conceived of as a cross-sectional view according to the arrows II—II in fig. 1;

Figure 3 is conceived of as a cross-sectional view according to the arrows III—III in fig. 1;

Figure 4 is an overall view of manufacturing corrugated plastics tube.

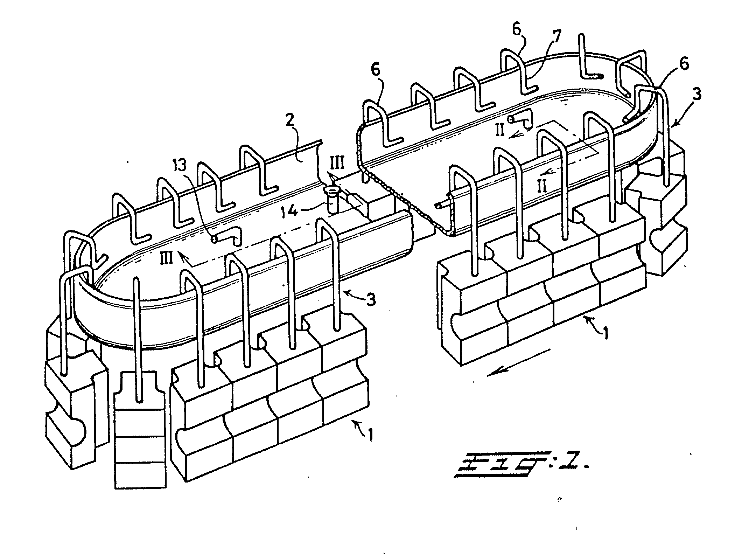

The idea of the invention is applicable to various moulds which are used for the manufacture of industrial products, in particular also with objects which are each formed individually. The invention will, however, be described with reference to an example of application in which mould halves 1 (see fig. 1) are circulating in order to create, with similar other mould halves, the complete mould cavity. The object formed remains in these mould halves until it has been cooled down sufficiently to maintain the shape obtained, at which moment the set of mould halves goes back along the outermost part of the loop towards the beginning. Fig. 1 shows one such loop.

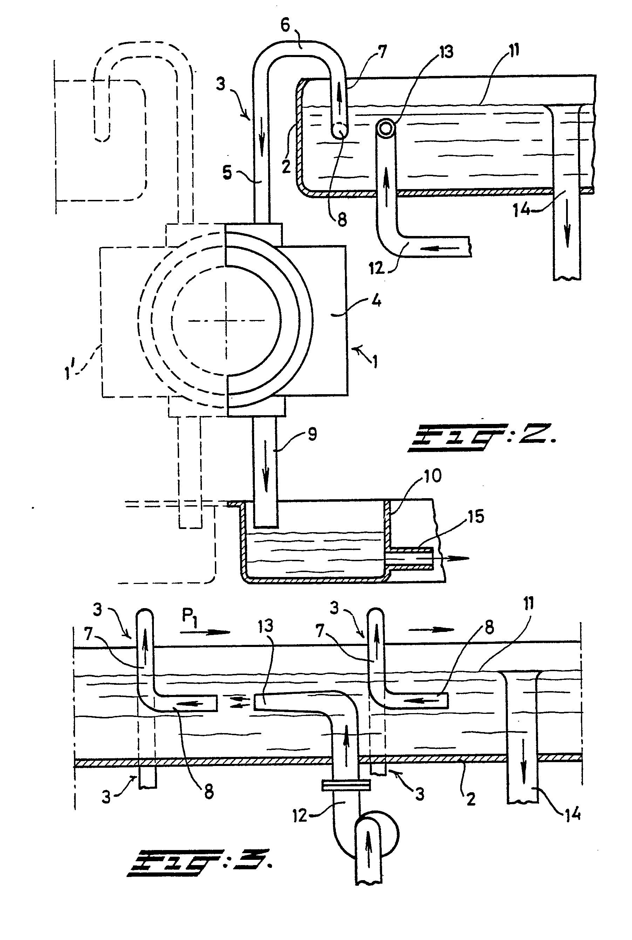

In fig. 2 a mould half is visible, to the left with broken lines the corresponding other mould half 1' being illustrated. As far as the present application there is referred to "moulds" this also implies "mould halves" of this type which pairwise determine the final shape of the product.

Because the support and the drive of the moulds as such does not constitute part of the inventive idea, there has been refrained from further illustration in the drawing or detailed description thereof.

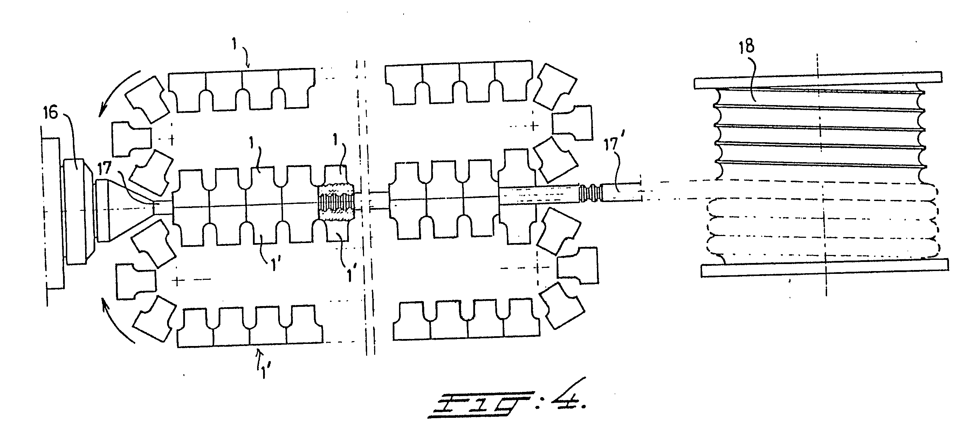

At short spacing above the horizontal plane in which the moulds such as 1 are circulating, a supply gutter for the cooling liquid has been arranged, in this case of a circulatory series of moulds such supply gutter being realized as a trough 2. Each of the moulds is provided with a siphon tube 3 which is connected with the internal space 4 of the mould which is adapted for the cooling. The siphon tube 3 may simply comprise a part 5 which extends straight upwardly, a part 6 which extends horizontally and subsequently part 7, which extends downwardly, the whole being dimensioned such that the siphon tube passes over the edge of the gutter 2. As will be further clarified with reference to fig. 3 the inflow end of the siphon tube may comprise a part 8 which has been bent horizontally.

At the bottom the mould 1 is provided with a discharge tube 9 which can be short and simply straight and which debouches above or in a collecting or discharge gutter 10 for the cooling liquid which leaves the moulds.

According to well known physical laws a flow through the siphon tube 3, once created, will continue as long as the entrance end of the siphon tube finds itself below the liquid level 11 in the supply gutter 2. Both in order to decrease the risk of disturbances and in order to make the siphon process begin when starting the machine, the entrance end 8 of the siphon tube (fig. 3) has been bent into the direction in which the siphon tube, together with the mould, moves through the gutter, said direction being indicated in fig. 3 by arrow P1. Furthermore, tubes 12 for supplying cooling liquid to the gutter 2 are provided with a bent end 13 which functions as a jet nozzle. This jet nozzle 13 points in the direction opposite to the direction of the inflow end 8 of the siphon tube. The jet nozzle 13 and the entrance end 8 of the siphon tube are, as a matter of course, not situated opposite one another, but in the length-wise direction of the gutter at a certain lateral spacing as appears from figures 1 and 3. The effect of the arrangement described of the jet nozzle 13 relative to the siphon inlet 18 is still, however, that at the entrance aperture of the siphon a hydrodynamic pressure is created which is sufficient to urge the liquid upwardly through the bend 7, 6, 5 by which the siphon action will be created at any moment at which it is not already present.

It will be clear that there can be provided a plurality of supply tubes 12 with jet nozzle 13, depending on the overall dimensions of the gutter or the amount of liquid respectively, which is required for cooling the total number of moulds.

Finally there can be pointed out yet that in the embodiment illustrated a discharge tube 14 is provided in the gutter 2, in form of an overflow, by which the liquid level 11 is determined. The circulation system for the liquid can then furthermore be realized such that the overflow 14 debouches somewhere in the collecting gutter 10. The water from this gutter 10 can be pumped away by a pump, not represented, via a discharge tube 15 and be supplied again, via a cooling installation, to the supply tube 13 for the upper gutter. The pump capacity can be dimensioned in such manner that it rotates continuously and has a yield which exceeds somewhat the total amount of cooling liquid which is being used by all moulds connected with one supply gutter 2. All such liquid is fed, via the supplies 12, 13, to the gutter whilst the overflow 14, as stated, determines the level 11.

Figure 4 diagramatically shows the arrangement in a production line for manufacturing plastics corrugated tubes. The pairs of mould halves 1, 1' are circulating in two loops. The straight portion of the paths, where the mould halves co-operate, joins the extruder 16 which continuously produces smooth tube 17. The moulds 1, 1' grant the tube a corrugation as is visible at the portion 17' which leaves the moulds; the product obtained can then be wound on a reel 18.

It is observed that the reference numerals in the claims must in no way be construed to restrict the scope thereof, but are only given in order to facilitate obtaining a quick understanding.

**Claims**

1. A method of cooling moulds (1) which are circulating in a horizontal plane, each mould (1) having an internal cooling space (4) connected with a supply aperture and a discharge aperture, through which cooling space the cooling medium is passed, characterized in that the liquid is passed by means of siphon action from a gutter or trough (2), situated on top, through the moulds (1) and is discharged to a collecting gutter (10) situated therebelow.

2. A method according to claim 1, characterized in that the cooling liquid is injected into the gutter (2) in a direction opposite to the entrance apertures (8) of the siphon tubes (3).

3. A method according to claim 1 or 2 as applied for manufacturing plastic industrial products.

4. A method according to claim 1, as applied for cooling mould halves circulating in two loop-shaped paths having adjoining straight portions, such that the mould halves move along with a plastics tube coming from an extruder so as to shape said tube.

5. A method according to claim 4, as applied to cooling mould halves for the manufacture of corrugated plastics tube (17').

6. A moulding apparatus comprising a plurality of moulds (1) which are circulating in a horizontal plane, each mould (1) having an internal cooling space (4) connected with a supply aperture and a discharge aperture for a cooling medium, characterized in that above the circulatory path of the moulds (1, 1') and substantially parallel to said path a supply gutter (2) for cooling liquid is arranged, as well as below and also substantially parallel to said path a discharge gutter (10) and in that the cooling medium supply aperture of each mould, at the top, is provided with a siphon tube (5) of such a shape that the entrance end (7, 8) thereof passes over the edge of the supply gutter (2) and down to a level lower than said edge, the cooling medium discharge aperture being provided, at the bottom of the mould (1), with a discharge tube (9) the outflow end of which finds itself in or above the discharge gutter (10).

7. An apparatus according to claim 6, characterized in that the entrance (8) of the siphon tube (3) is bent in horizontal direction.

8. An apparatus according to claim 7, characterized in that the supply gutter (2) is provided with jet pipes (12) for the supply of cooling liquid, which jet pipes are directed in the sense opposite to the direction of bending of the siphon tube (3).

9. An apparatus according to any of claims 6 to 8, characterized in that a pump is provided which recycles the cooling liquid from the discharge gutter (10) via a cooling device to the supply gutter (12).

10. An apparatus according to claim 9, characterized in that the supply gutter (2) is provided with an overflow (14) which determines the liquid level.

11. An apparatus according to any of claims 6 to 10 as applied with the manufacture of plastic industrial products.

12. An apparatus according to claim 11 in which the moulds are mould halves (1, 1') for the manufacture of plastics tube, more particularly corrugated plastics tube (17') in which said mould halves are displaced by means of two adjacent, circulating endless chains, such that over adjoining straight portions of the chain path pairs of mould halves, one on each chain, are operative so as to give a plastics tube (17) a desired shape.

**Revendications**

1. Procédé pour refroidir des moules (1) qui défilent dans un plan horizontal, chaque moule (1) possèdant un espace intérieur de refroidissement (4) qui communique avec une ouverture d'alimentation et une ouverture d'évacuation, espace de refroidissement à travers lequel circule l'agent de refroidissement, caractérisé en ce que le liquide est acheminé à travers les moules (1) par un effet de syphon depuis une gouttière ou bac (2), située en partie haute, et est évacué vers une gouttière collectrice (10) située en dessous des moules.

2. Procédé selon la revendication 1, caractérisé en ce que le liquide de refroidissement est injecté à l'intérieur de la gouttière (2) dans une direction opposée aux ouvertures d'entrée (8) des tubes-syphons (3).

3. Procédé selon la revendication 1 ou 2, appliqué à la fabrication de produits industriels en matière plastique.

4. Procédé selon la revendication 1, appliqué au refroidissement de demi-moules circulant le long de deux trajectoires en forme de boucles qui présentent des tronçons rectilignes adjacents, de telle façon que les demi-moules se déplacent le long de ces trajectoires avec un tuyau en matière plastique provenant d'une extrudeuse, afin de mettre en forme ledit tube.

5. Procédé selon la revendication 4, appliqué au refroidissement de demi-moules pour la fabrication de tubes ondulés en matière plastique (17').

6. Dispositif de moulage comprenant un certain nombre de moules (1) qui défilent dans un plan horizontal, chaque moule (1) possèdant un espace intérieur de refroidissement (4) qui communique avec une ouverture d'alimentation et une ouverture d'évacuation pour un agent de refroidissement, caractérisé en ce qu'au-dessus de la trajectoire de défilement des moules (1, 1'), est disposée, sensiblement parallèlement à ladite trajectoire, une gouttière d'alimentation (2) en liquide de refroidissement, tandis qu'en dessous, s'étend une gouttière d'évacuation (10) elle-aussi sensiblement parallèle à ladite trajectoire et en ce que l'ouverture d'alimentation en agent de refroidissement de chaque moule est, au sommet, pourvue d'un tube-syphon (5) ayant une forme telle que l'extrémité d'entrée (7, 8) de celui-ci passe au-dessus du bord de la gouttière d'alimentation (2) redescend à un niveau inférieur audit bord, l'ouverture d'évacuation de l'agent de refroidissement étant pourvue, à la base du moule (1), d'une tube d'évacuation (9) dont l'extrémité d'éjection se trouve elle-même à l'intérieur ou au-dessus de la gouttière d'évacuation (10).

7. Dispositif selon la revendication 6, caractérisé en ce que l'entrée (8) du tube-syphon (3) est repliée dans une direction horizontale.

8. Dispositif selon la revendication 7, caractérisé en ce que la gouttière d'alimentation (2) est équipée de tuyaux d'éjection (12) pour la distribution du liquide de refroidissement, ces tuyaux d'éjection étant dirigés en sens opposé à la direction selon laquelle le tube-syphon (3) est replié.

9. Dispositif selon l'une quelconque des revendications 6 à 8, caractérisé en ce qu'un pompe est prévue pour recycler le liquide de refroidissement issu de la gouttière d'évacuation (10) vers la gouttière d'alimentation (12), à travers un dispositif de refroidissement.

10. Dispositif selon la revendication 9, caractérisé en ce que la gouttière d'alimentation (2) est pourvue d'un trop-plein (14) qui détermine le niveau du liquide.

11. Dispositif selon l'une quelconque des revendications 6 à 10, utilisé dans le cadre de la fabrication de produits industriels en matière plastique.

12. Dispositif selon la revendication 11, dans lequel les moules sont des demi-moules (1, 1') pour la fabrication de tuyaux en matière plastique, plus particulièrement de tuyaux ondulés en matière plastique (17'), dans lequel lesdits demi-moules sont déplacés au moyen de deux chaînes sans fin mobiles adjacentes, de telle façon que sur des tronçons rectilignes adjacents des trajets des chaînes, les paires de demi-moules, dont chacun est disposé sur une chaîne respective, entrent en action pour donner à un tuyau de matière plastique (17) une forme souhaitée.

## Patentansprüche

1. Verfahren zum Kühlen von in einer horizontalen Ebene umlaufenden Formen (1), wobei jede Form (1) einen mit einer Zuführöffnung und einer Auslaßöffnung verbundenen inneren Kühlraum (4) besitzt, durch den das Kühlmedium hindurchgeführt wird, dadurch gekennzeichnet, daß die Flüssigkeit durch Siphonworkung von einer oben gelegenen Rinne oder Wanne (2) durch die Formen hindurchgeleitet und an eine unter diesen gelegene Sammelrinne (10) abgeführt wird.

2. Verfahren nach Anspruch 1, dadurch gekennzeichnet, daß die Kühlflüssigkeit in die Rinne (2) in einer den Einlaßöffnungen (8) der Siphonrohre (3) entgegengesetzten Richtung eingeführt wird.

3. Verfahren nach Anspruch 1 oder 2 in seiner Anwendung zur Herstellung industrieller Erzeugnisse aus Kunststoff.

4. Verfahren nach Anspruch 1 in siener Anwendung zum Kühlen von Formhälften, die in zweischleifenförmigen Bahnen mit sich aneinanderfügenden geraden Bereichen umlaufen, derart, daß sich die Formhälften mit einem aus einem Extruder austretenden Kunststoffrohr zu dessen Formung fortbewegen.

5. Verfahren nach Anspruch 4 in seiner Anwendung zum Kühlen von Formhälften zum Herstellen von Kunstoffwellrohren (17').

6. Formvorrichtung mit einer Mehrzahl von Formen (1), die in einer horizontalen Ebene umlaufen, wobei jede Form (1) einen inneren Kühlraum (4) besitzt, der mit einer Zuführöffnung und einer Auslaßöffnung für ein Kühlmedium verbunden ist, dadurch gekennzeichnet, daß oberhalb der Umlaufbahn der Formen (1, 1') und im wesentlichen parallel zu dieser Bahn eine Zuführrinne (2) für Kühlflüssigkeit sowie unterhalb und ebenfalls im wesentlichen parallel zu dieser Bahn einer Auslaßrinne (10) angeordnet ist und daß die Kühlmittel-Zuführöffnung jeder Form an der Oberseite mit einem Siphonrohr (5) von einer solchen Form versehen ist, daß dessen Eintriffsende über den Rand der Zuführrinne (2) und nach unten zu einer unterhalb dieses Randes liegenden Ebene verläuft, während die Kühlmittel-Auslaßöffnung am Boden der Form (1) mit einem Auslaßrohr (9) versehen ist, dessen Ausflußende sich in oder über der Auslaßrinne (10) befindet.

7. Vorrichtung nach Ansprüche 6, dadurch gekennzeichnet, daß der Eingang (8) des Siphonrohres (3) in eine horizontale Richtung abgewinkelt ist.

8. Vorrichtung nach Anspruch 7, dadurch gekennzeichnet, daß die Zuführrinne (2) mit Düsenrohren (12) für die Zufuhr von Kühlflüssigkeit versehen ist, wobei die Düsenrohre entgegen der Abwinkelungsrichtung des Siphronrohres (3) ausgerichtet sind.

9. Vorrichtung nach einem der Ansprüche 6 bis 8, dadurch gekennzeichnet, daß eine Pumpe vorgesehen ist, die die Kühlflüssigkeit von der Auslaßrinne (10) über eine Kühlvorrichtung zur Zuführrinne (2) im Kreislauf fördert.

10. Vorrichtung nach Anspruch 9, dadurch gekennzeichnet, daß die Zuführrinne (2) mit einem Überlauf (14) versehen ist, der den Flüssigkeitsspiegel bestimmt.

11. Vorrrichtung nach einem der Ansprüche 6 bis 10, in Anwendung bei der Herstellung industrieller Erzeugnisse aus Kunststoff.

12. Vorrichtung nach Anspruch 11, wobei die Formen Formhälften (1, 1') zur Herstellung von Kunststoffrohr, insbesondere von Kunststoffwellrohr (17'), sind und wobei ferner die Formhälften mit Hilfe zweier benachbarter, umlaufender Endlosketten bewegt werden, derart, daß auf sich aneinanderfügenden geraden Bereichen der Kettenbahn Paare von Formhälften, mit jeweils einer Formhälfte an jeder Kette, zusammenwirken, um einem Kunststoffrohr (17) gewünschte Form zu geben.

Fig.1.

0 067 472

FIG. 2.

FIG. 3.

Fig. 4